(19) Europäisches Patentamt
European Patent Office
Office européen des brevets

(11) **EP 3 202 597 B1**

(12) **EUROPEAN PATENT SPECIFICATION**

(45) Date of publication and mention
of the grant of the patent:
**10.10.2018  Bulletin 2018/41**

(51) Int Cl.:
***B60C 17/00*** *(2006.01)*        ***B60C 3/04*** *(2006.01)*
***B60C 15/06*** *(2006.01)*

(21) Application number: **15847211.8**

(22) Date of filing: **21.08.2015**

(86) International application number:
**PCT/JP2015/004200**

(87) International publication number:
**WO 2016/051649 (07.04.2016 Gazette 2016/14)**

(54) **RUN-FLAT TIRE**

NOTLAUFREIFEN

PNEU À FLANCS RENFORCÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **03.10.2014   JP 2014205248**

(43) Date of publication of application:
**09.08.2017   Bulletin 2017/32**

(73) Proprietor: **Bridgestone Corporation
Tokyo 104-8340 (JP)**

(72) Inventors:
• **KUWAYAMA, Isao
Tokyo 104-8340 (JP)**

• **HATANAKA, Shintaro
Tokyo 104-8340 (JP)**

(74) Representative: **Oxley, Robin John George
Marks & Clerk LLP
90 Long Acre
London WC2E 9RA (GB)**

(56) References cited:
**WO-A1-2015/182153        JP-A- H 082 220
JP-A- 2005 119 384        JP-A- 2005 247 007
JP-A- 2013 063 765        JP-A- 2013 063 765
US-A1- 2005 205 187**

**Description**

TECHNICAL FIELD

This disclosure relates to a run-flat tire.

BACKGROUND

Conventionally, as disclosed in PTL1, suggested is a technique for improving fuel efficiency by using a narrow-width, large-diameter tire, which is desired as an effective technique for use as, e.g., a tire for electric automobiles.
PTL1: WO2012/176476A1. Attention is also drawn to the disclosures of JP2013 063765 showing a tire according to the preamble of claim 1 and also to WO2015/182153-A1, which has been published after the filing date of the present application.

SUMMARY

(Technical Problem)

In the aforementioned technique, run-flat travelling performances are desired as well. However, as for a run-flat tire having on a sidewall portion a side reinforcing rubber with a crescent-like cross section, considering that high fuel efficiency is deteriorated due to weight increase caused by the side reinforcing rubber, it is desired that the aforementioned narrow-width, large-diameter tire achieves both high fuel efficiency and run-flat durability.
This disclosure is to provide a run-flat tire which improves the fuel efficiency, and simultaneously ensures the run-flat durability.

(Solution to Problem)

According to a first aspect of the invention there is provided a run-flat tire in accordance with claim 1.
The run-flat tire of this disclosure includes a tread portion, a pair of sidewall portions continuous on both sides of the tread portion, bead portions continuous on each sidewall portion, side reinforcing rubbers with crescent-like cross section disposed on the sidewall portions, a carcass formed of plies of radially arranged cords extending toroidally between the pair of bead portions, wherein: when the tire is mounted to a rim, and an internal pressure of 250 kPa or more is applied to the tire, in a case where a sectional width SW of the tire is less than 165 mm, a ratio of the sectional width SW to an outer diameter OD of the tire, SW/OD, is 0.26 or less; and in a case where the sectional width SW of the tire is 165 mm or more, the sectional width SW and the outer diameter OD of the tire satisfy a relation expression $OD \geq 2.135 \times SW + 282.3$ (mm); the bead portions have bead cores, and further have bead fillers on a tire radial outer side of the bead cores; and when H1 is a tire radial maximum length of the side reinforcing rubber in a tire widthwise cross section in a reference state where the tire is mounted to a rim and filled with a predetermined internal pressure with no load applied thereon, and H2 is a length of a line segment connecting a tire radial outermost point of the bead filler and a tire radial outermost point of the bead core, H1 and H2 satisfy $1.8 \leq H1/H2 \leq 3.5$.
According to the run-flat tire of this disclosure, it is possible to improve the fuel efficiency, and simultaneously ensure the run-flat durability.
Here, the "rim" is a valid industrial standard for the region in which the tire is produced or used, and refers to a standard rim of an applicable size (the "Measuring Rim" in the STANDARDS MANUAL of ETRTO, and the "Design Rim" in the "YEAR BOOK" of TRA) which is described or will be described in the "JATMA Year Book" of JATMA (The Japan Automobile Tyre Manufacturers Association) in Japan, the "ETRTO STANDARD MANUAL" of ETRTO (the European Tyre and Rim Technical Organisation) in Europe, or the "TRA YEAR BOOK" of TRA (the Tire and Rim Association,Inc.) in the United States of America, etc. (namely, the aforementioned "rim" is inclusive of current sizes and sizes which are possibly included in the aforementioned industrial standards. Examples for "size which will be described" are the sizes described as "FUTURE DEVELOPMENTS" in ETRTO 2013 edition.). As for sizes not described in the aforementioned industrial standards, the "rim" refers to rims having a width corresponding to the bead width of the tire.
Moreover, the "predetermined internal pressure" refers to a state that the tire is applied an air pressure of a single wheel corresponding to a maximum load capability (maximum air pressure) at applicable size and ply rating, as described by JATMA, etc. As for sizes not described in the aforementioned industrial standards, the "predetermined internal pressure" refers to an air pressure corresponding to a maximum load capability determined depending on the vehicle to which the tire is mounted (maximum air pressure). Further, the "maximum load" mentioned below refers to a load corresponding to the aforementioned maximum load capability.
In the case where one or both of the "tire radial outermost point of the bead filler" and the "tire radial outermost point of the bead core" exist in a plurality, a segment is connected in a manner such that H2 is maximum.

(Advantageous Effect)

According to this disclosure, it is possible to provide a run-flat tire which improves the fuel efficiency, and simultaneously ensures the run-flat durability.

BRIEF DESCRIPTION OF THE DRAWINGS

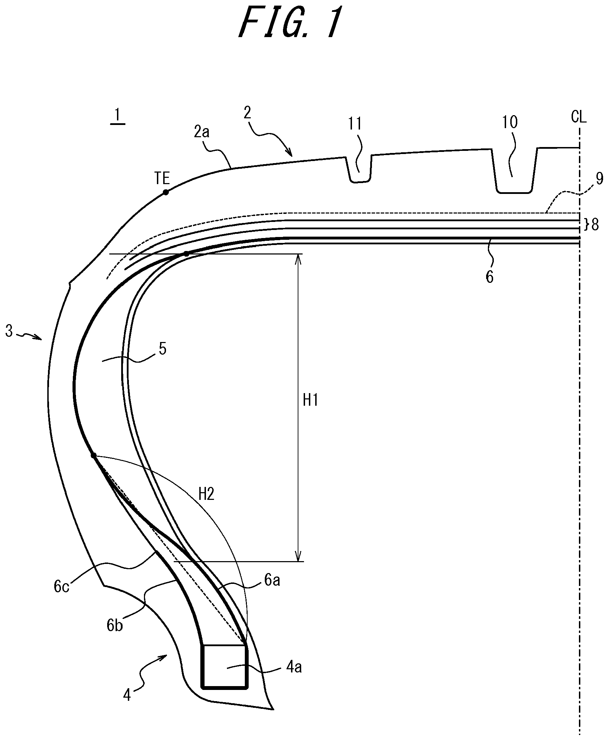

FIG. 1 illustrates a tire widthwise cross-sectional view of a run-flat tire according to one embodiment of this disclosure.

DETAILED DESCRIPTION

Hereinafter, an embodiment of this disclosure will be described with reference to the drawings.
FIG. 1 illustrates a tire widthwise cross-sectional view of a run-flat tire (hereinafter referred to as merely "tire") according to one embodiment of this disclosure. Illustrated in FIG. 1 is a tire widthwise cross section of the tire in a reference state as being mounted to a rim and filled with a predetermined internal pressure with no load applied thereon. FIG. 1 illustrates merely one tire widthwise half portion partitioned by the tire equatorial plain CL, while the other tire widthwise half portion is of the same structure as well.
Here, when this tire 1 is mounted to a rim, and an internal pressure of 250 kPa or more is applied to the tire 1, in a case where a sectional width SW of the tire is less than 165 mm, a ratio of the sectional width SW (mm) to an outer diameter OD (mm) of the tire 1 , SW/OD, is 0.26 or less; and in a case where the sectional width SW of the tire is 165 mm or more, the sectional width SW (mm) and the outer diameter OD (mm) of the tire 1 satisfy a relation expression $OD \geq 2.135 \times SW + 282.3$ (mm).
The run-flat tire of this disclosure is not limited, and may be exemplified as those of tire size 145/60R19, 145/60R18, 145/60R17, 155/70R19, 155/55R19, 155/55R18, 165/60R19, 165/55R18, 175/60R19, 175/55R18, 175/55R20, 175/60R18, 185/60R20, 185/55R20, 185/60R19, 185/55R19, 195/50R20, 195/55R20, 205/50R21, etc.
As illustrated in FIG. 1, the tire 1 includes a tread portion 2, a pair of (one illustrated) sidewall portions 3 continuous on both sides (one side illustrated) of the tread portion 2, bead portions 4 continuous on each (one illustrated) sidewall portion 3, side reinforcing rubbers 5 with crescent-like cross section disposed on the sidewall portions 3, a carcass 6 formed of plies of radially arranged cords extending toroidally between the pair of (one illustrated) bead portions 4.
As illustrated in FIG. 1, the bead portions 4 have bead cores 4a. In this disclosure, the bead cores 4a may have various shapes such as circular cross section, polygonal cross section, etc.
Moreover, in the present embodiment, on tire radial outer sides of the bead cores 4a, bead fillers 7 with an approximately triangular cross section are arranged.
Further, the bead portions 4 may have reinforcement members such as reinforcing rubber layers, reinforcing cord layers and the like disposed thereon. These reinforcement members may be disposed on various positions on the bead portions 4; for example, the reinforcement members may be disposed on tire widthwise outer sides and/or inner sides of the bead fillers 7.
In the present embodiment, the carcass 6 has a carcass main body 6a and a carcass folded-up portion 6b, the carcass main body 6a fixed to the pair of bead cores 4a, the carcass folded-up portion 6b extending from the carcass main body 6a and formed by folding up a circumference of the bead cores 4a from a tire widthwise inner side to a tire widthwise outer side.
On the other hand, in this disclosure, the carcass 6 is not limited to folded-up structure, but may be, for example, a structure such that the bead cores 4a are separated into a plurality, and the carcass 6 is surrounded by the plurality of separated bead core members.
In this disclosure, the carcass line may be of various shapes, for example, a carcass maximum width position may be set either close to the bead portions 4 side or close to the tread portion 2 side.
The number of cords of the carcass may be in a range of 20 to 60 per 50 mm, without being limited thereto.
In the present embodiment, a folded-up end 6c of the folded-up portion 6b of the carcass 6 is located on a tire radial side inner than a tire radial outer end of the bead filler 7, while it is possible to locate the same on a tire radial outer end of the bead filler 7 or a tire radial side outer than a tire maximum width position.
Moreover, in the case where the carcass 6 is formed of a plurality of carcass plies, the positions of the folded-up ends 6c of each ply may be different from each other.
In the present embodiment, the carcass 6 extends continuously between the bead cores 4a completely, while in this disclosure, the carcass 6 is not limited to the aforementioned example, and may, for example, extend from the bead core 4a to a tire widthwise outer region of the tread portion 2, to form a pair of divided carcasses of which a tire widthwise central region is extracted.

Here, as illustrated in FIG. 1, this tire 1 further has a belt 8 formed of belt layers (two in the illustrated example) on a tire radial outer side of a crown portion of the carcass 6, and reinforcing belt layers 9 (one in the illustrated example) arranged on a tire radial outer side of the belt 8.

Here, in the illustrated example, the belt 8 is an inclined belt, in which belt cords cross each other between the layers. The belt cords may be, for example, steel cords, organic fiber cords, etc., without being limited thereto. Moreover, the belt cords of each belt layer may extend at an angle of 20 to 75° with respect to the tire circumferential direction.

Moreover, the belt reinforcement layers 9 may use spiral cords coiling in a spiral shape approximately in the tire circumferential direction, high rigidity cords (cords having a Young's modulus of 50 MPa or more determined according to JIS L1017 8.8 (2002) when tested according to JIS L1017 8.5 a) (2002)), low rigidity cords (cords having a Young's modulus of less than 50 MPa at the same conditions), high elongation cords, high heat shrinkage cords (cords having a heat shrinkage of 1% or more with a load of 50 g under 170°C), etc. Further, the cords of the belt reinforcement layers 9 may be monofilament cords, cords obtained by twisting a plurality of filaments, or even cords obtained by twisting filaments of different materials.

The number of cords of the belt reinforcement layers 9 may be in a range of 20 to 60 per 50 mm, without being limited thereto.

Moreover, the cords of the belt reinforcement layers 9 may be distributed with the rigidity, the material, the number of layers, the number of cords, etc. varying in the tire width direction. For example, the number of layers may be increased in merely the tire widthwise end, or in merely the tire widthwise central portion.

Moreover, the tire widthwise width of the belt reinforcement layers 9 may be either larger or smaller than the belt 8.

Further, in the present embodiment, the belt reinforcement layers 9 are arranged on the tire radial outer side of the belt 8, while in this disclosure, the belt reinforcement layers 9 may be arranged on the tire radial inner side of the belt 8 as well.

Here, in this disclosure, the tread portion 2 may be formed of one rubber layer, or formed by laminating in the tire radial direction a plurality of different rubber layers. In the case of using a plurality of different rubber layers, loss tangent, modulus, hardness, glass-transition temperature, material, etc. thereof may be different. Moreover, the thickness of the plurality of rubber layers may vary in the tread width direction, and merely groove bottoms of circumferential grooves may be formed of rubber layers of types different from its surroundings.

Moreover, in this disclosure, the tread portion 2 may be formed by arranging a plurality of different rubber layers in the tire width direction, and in this case, loss tangent, modulus, hardness, glass-transition temperature, material, etc. may vary among the layers. Moreover, it is possible to vary the ratio of tire widthwise width of the plurality of rubber layers in the tread radial direction, or to use rubber layers of types different from its surroundings in merely a part of the region, such as merely groove bottoms of circumferential grooves, merely the vicinity of tread edges, merely tire widthwise outermost land portions, merely a tire widthwise central land portion, etc.

In this disclosure, in a tire widthwise cross section in the aforementioned reference state, a ratio LCR/TW is preferably 0.06 or less and more preferably 0.02 or more and 0.05 or less, where LCR is a height difference, i.e., a tire radial distance between a straight line m1 and a straight line m2, m1 is a straight line parallel to the tire width direction across a point on the tread surface in the tire equatorial plain CL (a point on a virtual outer contour line of the tread in the case where the portion is a groove), m2 is a straight line parallel to the tire width direction across the tread edge TE, and TW is a tread width. This is because that the durability and the wear resistance of the tire can be improved. Here, the "tread edge" refers to a tire widthwise outermost end of a portion contacting with the road surface when filled with the aforementioned predetermined internal pressure with the maximum load applied thereon.

Further, in this disclosure, the thickness of the sidewall portions 3 is preferably thin. Specifically, in the aforementioned reference state, a tire widthwise cross section area S1 of the bead fillers 7 is preferably 1 to 4 times to a tire widthwise area S2 of the bead cores 4a. By setting S1 to 4 times or less to S2, the riding comfort can be ensured, while on the other hand, by setting S1 to one time or more to S2, the steering stability can be ensured.

In the tire of this disclosure, the loss tangent tan $\delta$ of the side reinforcing rubbers 5 is preferably 0.05 to 0.15. By setting the loss tangent tan $\delta$ to 0.05 or more, the damping property can be improved, while on the other hand, by setting the loss tangent tan $\delta$ to 0.15 or less, the heat buildup in the side reinforcing rubbers 5 can be suppressed. Further, in the tire of this invention, the 50% stretch modulus of the side reinforcing rubbers 5 is 1.5 to 6.0 MPa. By setting the 50% stretch modulus of the side reinforcing rubbers 5 to 1.5 MPa or more, the steering stability can be further ensured, while on the other hand, by setting the 50% stretch modulus of the side reinforcing rubbers 5 to 6.0 MPa or less, the comfort and riding comfort can be further ensure. Further, the aforementioned loss tangent tan $\delta$ and 50% stretch modulus refer to values measured with respect to a specimen 2 mm thick, 5 mm wide and 20 mm long, at the conditions of an initial strain of 1%, a dynamic strain frequency of 50 Hz, and a temperature of 60°C.

Moreover, as illustrated in FIG. 1, the side reinforcing rubbers 5 are preferably arranged on the tire widthwise inner side of the carcass 6.

When H1 is a tire radial maximum length of the side reinforcing rubber 5 in a tire widthwise cross section in a reference state where the tire is mounted to a rim, applied a predetermined internal pressure and applied no load, and H2 is a length of a line segment connecting a tire radial outermost point of the bead filler 7 and a tire radial outermost point of the bead core 4a, the run-flat tire 1 of the present embodiment satisfies $1.8 \leq H1/H2 \leq 3.5$.

Hereinafter, the effects of the run-flat tire of the present embodiment are described.

We have intensively studied the problem of improving the fuel efficiency and simultaneously ensuring the run-flat durability. As a result, it was discovered that in a narrow-width, large-diameter tire satisfying the aforementioned relation expression regarding the sectional width SW and the outer diameter OD, there is a tendency that buckling occurring in the tread portion is reduced, and thus the rigidity of the side wall portions is not particularly necessary.

Then, we obtained the new knowledge that by simplifying the internal structure of the side wall portions, it is possible to improve the fuel efficiency, and simultaneously ensure the run-flat durability, and thereby accomplished this disclosure.

First, the run-flat tire of the present embodiment is a narrow-width, large-diameter tire satisfying the aforementioned relation expression regarding the sectional width SW and the outer diameter OD, and thus is capable of reducing the air resistance and the rolling resistance, and improving the fuel efficiency.

Further, by satisfying the aforementioned relation expression of the ratio H1/H2, it is possible to maintain the aforementioned improvement effect of fuel efficiency, and to simultaneously ensure the run-flat durability.

Namely, when the ratio H1/H2 is smaller than 1.8, as compared to the volume of the side reinforcing rubbers 5 enabling run-flat travelling, the volume of the bead fillers 7 becomes larger, which deteriorates the fuel efficiency, while on the other hand, when the ratio H1/H2 is larger than 3.5, as compared to the volume of the bead fillers 7, the volume of the side reinforcing rubbers 5 becomes larger, which deteriorates the fuel efficiency as well. In the run-flat tire of the present embodiment, since the ratio H1/H2 is 1.8 or more and 3.5 or less, it is possible to improve the fuel efficiency and to ensure the run-flat durability.

For the same reason, the ratio H1/H2 is more preferably 2 or more and 3 or less.

Further, in a tire of a conventional size of which the sectional width SW and the outer diameter OD does not satisfy the aforementioned relation expression, in order to ensure the run-flat durability, an ordinary method is to enlarge the bead fillers and to set the ratio H1/H2 to a small value. On the other hand, in the tire of the present embodiment, as mentioned above, since the buckling of the tread portion is smaller, even if the volume of the bead fillers 7 is reduced, and the ratio H1/H2 is set to 1.8 or more, which is larger than the value set in a tire of a conventional size, it is possible to maintain sufficient run-flat durability, and to simultaneously further improve the fuel efficiency.

Moreover, the ratio H1/SH of H1 to a tire cross section height SH is preferably within a range of 45% to 65%. If the ratio H1/SH is larger than 65%, the fuel efficiency tends to be deteriorated, while on the other hand, if the ratio H1/SH is less than 45%, the run-flat durability tends to be reduced. For the same reason, the ratio H1/SH is preferably within a range of 50% to 60%.

In the run-flat tire of this disclosure, the relation expression:

$$10(\mathrm{mm}) \leq (SW/OD) \times H1 \leq 20(\mathrm{mm})$$

is preferably satisfied.

This is because that by setting $(SW/OD) \times H1$ to 10 (mm) or more, it is possible to ensure the volume of the side reinforcing rubbers 5, and to thereby further ensure the run-flat durability, and on the other hand, by setting $(SW/OD) \times H1$ to 20 (mm) or less, it is possible to reduce the weight of the side reinforcing rubbers 5, and to thereby further improve the fuel efficiency.

In the run-flat tire of this disclosure, a maximum thickness of the side reinforcing rubbers 5 measured in a direction perpendicular to the carcass 6 is 6 mm or less. This is because that it is possible to further ensure the fuel efficiency.

Moreover, in the run-flat tire of this disclosure, it is preferable to locate end portions on tire radial outer sides of the side reinforcing rubbers 5 on a tire widthwise side inner than an end portion of a maximum width belt layer with a maximum tire widthwise width. More specifically, a tire widthwise overlapping width of the side reinforcing rubbers 5 and the maximum width belt layer is preferably 10% or less of the width of the maximum width belt layer.

Further, in the run-flat tire of this disclosure, in the tire widthwise cross section in the aforementioned reference state, the folded-up end 6c of the carcass folded-up portion 6b is located on a tire radial side inner than the tire maximum width position. This is because that the fuel efficiency can be further ensured. For the same reason, in the tire widthwise cross section in the aforementioned reference state, a tire radial height of the folded-up end 6c of the carcass folded-up portion 6b from a tire radial innermost position direction of the carcass 6 is preferably 30 mm or less.

In this disclosure, a negative ratio (a ratio of the groove area to the area of the entire tread surface) is preferably 25% or less. Moreover, in the case where the vehicle-installed direction is determined, different negative ratio may be set on the vehicle-installed inner side and outer side partitioned by the tire equatorial plain CL. For example, the negative ratio on the vehicle-installed inner side may be set larger than the vehicle-installed outer side.

In the tire of this disclosure, the tread surface may have widthwise grooves extending in the tire width direction from the tire widthwise central region to the tread edge TE disposed thereon. In this case, it is possible to obtain a configuration without circumferential grooves extending in the tire circumferential direction on the tread surface.

The tire of this disclosure may be configured such that a plurality of lib-like land portions are partitioned by a plurality of circumferential grooves and tread edges TE. Here, the "lib-like land portion" refers to a land portion extending in the tire circumferential direction without being divided by grooves extending in the tire width direction, and the "lib-like land portion" is inclusive of those having widthwise grooves ending within the lib-like land portion and those divided by sipes.

In the aforementioned case, regarding a tire widthwise outermost land portion partitioned by a tire widthwise outermost circumferential groove and a tread edge TE among the plurality of lib-like land portions, for example, from the viewpoint of improving the steering stability, it is preferable to set the width in the tire width direction of the tire widthwise outermost land portion on the vehicle-installed outer side larger than the tire widthwise width of the tire widthwise outermost land portion on the vehicle-installed inner side.

In the tire of this disclosure, porous members for reducing the cavity resonance noise may be arranged on the tire internal surface. Moreover, for the same reason, electrostatic flocking may be performed to the tire internal surface.

In the tire of this disclosure, it is preferable to arrange on the tire internal surface an inner liner for maintaining the internal pressure of the tire, and the inner liner may be formed of a rubber layer mainly containing a butyle rubber, and a film layer mainly containing a resin.

In the tire of this disclosure, sealant members for avoiding air leakage when puncturing may be arranged on the tire internal surface.

The internal pressure of the tire of this disclosure is preferably 250 kPa or more, more preferably 280 kPa or more, and further more preferably 300 kPa or more.

Moreover, the tire of this invention has an air volume of 15000 cm$^3$ or more in order to afford probable load when used on public roads.

EXAMPLES

In order to certify the effects of this disclosure, tires according to Examples 1 to 3 and Comparative Examples 1 to 3 were produced experimentally, and subjected to tests for evaluating the fuel efficiency and the run-flat of the tires. The dimensions of each tire are as shown in the following Table 1.

<Fuel efficiency>

Tests were performed via JC08 mode travelling. The evaluation results are represented by index with the evaluation result of the tire according to Comparative Example 1 as 100, where a larger index shows a better fuel efficiency.

<Run-flat durability>

The tires were travelled on a drum testing machine at a speed of 80 km/h with a load equal to 65% of the maximum load according to the LI (Load Index) applied thereon, and the distance until the tires failed and became untravelable were measured, with 160 km for 2 hours as the finishing condition. The results of index evaluation were as shown in Table 1, with the run-flat durability of the tire of Comparative Example 1 as 100. A larger value shows a better run-flat durability of the tire.

These evaluation results are shown in the following Table 1 together with the dimensions of the tires.

[Table 1]

|  | Example 1 | Example 2 | Example 3 | Comparative Example 1 | Comparative Example 2 | Comparative Example 3 |
|---|---|---|---|---|---|---|
| SW | 155 | 155 | 155 | 225 | 155 | 155 |
| OD | 653 | 653 | 653 | 634 | 653 | 653 |
| Ratio SW/OD | 0.237 | 0.237 | 0.237 | 0.35 | 0.237 | 0.237 |
| Ratio H1/H2 | 2.5 | 1.8 | 3.5 | 1.3 | 1.5 | 4 |

(continued)

|  | Example 1 | Example 2 | Example 3 | Comparative Example 1 | Comparative Example 2 | Comparative Example 3 |
|---|---|---|---|---|---|---|
| Fuel efficiency | 115 | 105 | 106 | 100 | 103 | 102 |
| Run-flat durability | 160 | 145 | 130 | 100 | 133 | 122 |

As shown in Table 1, it is understood that as compared to the tires according to Comparative Examples 1 to 3, each tire according to Examples 1 to 3 achieves both the fuel efficiency and the run-flat durability.

REFERENCE SIGNS LIST

1      run-flat tire
2      tread portion
3      sidewall portion
4      bead portion
4a     bead core
5      side reinforcing rubber
6      carcass
6a     carcass main body
6b     carcass folded-up portion
6c     folded-up end
7      bead filler
8      belt
9      belt reinforcement layer
CL     tire equatorial plain
TE     tread edge

**Claims**

1.  A tire (1) comprising a tread portion (2), a pair of sidewall portions (3) continuous on both sides of the tread portion (2), bead portions (4) continuous on each sidewall portion (3), side reinforcing rubbers (5) with crescent-like cross section disposed on the sidewall portions, a carcass (6) formed of plies of radially arranged cords extending toroidally between the pair of bead portions (4), wherein:

    when the tire (1) is mounted to a rim, and an internal pressure of 250 kPa or more is applied to the tire (1),
    in a case where a sectional width SW of the tire is less than 165 mm, a ratio of the sectional width SW to an outer diameter OD of the tire, SW/OD, is 0.26 or less; and
    in a case where the sectional width SW of the tire is 165 mm or more, the sectional width SW and the outer diameter OD of the tire satisfy a relation expression

    $$OD \geq 2.135 \times SW + 282.3 \text{ (mm)};$$

    the bead portions (4) have bead cores (4a), and further have bead fillers (7) on a tire radial outer side of the bead cores (4a); wherein the folded-up end (6c) of the carcass folded-up portion (6b) is located on a tire radial side inner than the tire maximum width position,

    **characterised in that**:

    the tire is a run-flat tire (1); **in that**

when H1 is a tire radial maximum length of the side reinforcing rubber (5) in a tire widthwise cross section in a reference state where the tire (1) is mounted to a rim and filled with a predetermined internal pressure with no load applied thereon, and H2 is a length of a straight line segment connecting a tire radial outermost point of the bead filler (7) and a tire radial outermost point of the bead core (4a), H1 and H2 satisfy

$$1.8 \leq H1/H2 \leq 3.5;$$

in that
the 50% stretch modulus of the side reinforcing rubbers (5) is 1.5 to 6.0 Mpa; **in that**
a maximum thickness of the side reinforcing rubbers (5) measured in a direction perpendicular to the carcass (6) is 6 mm or less; and **in that**
the tire has an air volume of 15000 cm$^3$.

2. A run-flat tire according to claim 1, wherein the carcass (6) forms a pair of divided carcasses of which a tire widthwise central region is extracted.

3. A run-flat tire according to claim 1 or 2, wherein the ratio H1/SH of H1 to a tire cross section height SH is within a range of 45% to 65%.

4. A run-flat tire according to any one of the preceding claims, wherein a tire radial height of the folded-up end (6c) of the carcass folded-up portion (6b) from a tire radial innermost position direction of the carcass (6) is 30 mm or less.

## Patentansprüche

1. Reifen (1), der einen Laufflächenabschnitt (2), ein Paar von Seitenwandabschnitten (3) durchgehend auf beiden Seiten des Laufflächenabschnitts (2), Wulstabschnitte (4) durchgehend an jedem Seitenwandabschnitt (3), Seitenverstärkungsgummis (5) mit halbmondartigem Querschnitt, die an den Seitenwandabschnitten angeordnet sind, eine Karkasse (6), die aus Lagen radial angeordneter Kords gebildet ist, die sich kreisringartig zwischen dem Paar von Wulstabschnitten (4) erstreckt, umfasst, wobei:

wenn der Reifen (1) auf einer Felge montiert ist und ein Innendruck von 250 kPa oder mehr an den Reifen (1) angelegt wird,
in einem Fall, in dem eine Schnittbreite SW des Reifens geringer ist als 165 mm, ein Verhältnis der Schnittbreite SW zu einem Außendurchmesser OD des Reifens, SW/OD, 0,26 oder weniger beträgt, und
in einem Fall, in dem die Schnittbreite SW des Reifens 165 mm oder mehr beträgt, die Schnittbreite SW und der Außendurchmesser OD des Reifens einen Vergleichsausdruck

$$OD \geq 2{,}135 \times SW + 282{,}3 \ (\text{mm}) \ \text{erfüllen,}$$

wobei die Wulstabschnitte (4) Wulstkerne (4a) aufweisen und ferner Kernreiter (7) auf einer Reifenradialaußenseite der Wulstkerne (4a) aufweisen,
wobei das hochgeschlagene Ende (6c) des hochgeschlagenen Karkassenabschnitts (6b) auf einer Reifenradialseite weiter innen angeordnet ist als die Position maximaler Reifenbreite,
**dadurch gekennzeichnet, dass**:

der Reifen ein Notlaufreifen (1) ist, dadurch dass,
wenn H1 eine Reifenradialmaximallänge des Seitenverstärkungsgummis (5) in einem Reifenbreitenquerschnitt in einem Referenzzustand ist, in dem der Reifen (1) auf einer Felge montiert und mit einem vorbestimmten Innendruck gefüllt ist, wobei keine Last auf ihn ausgeübt wird, und H2 eine Länge einer geraden Strecke ist, die einen in Reifenradialrichtung äußersten Punkt des Kernreiters (7) und einen in Reifenradialrichtung äußersten Punkt des Wulstkerns (4a) verbindet, H1 und H2

$$1{,}8 \leq H1/H2 \leq 3{,}5 \ \text{erfüllen,}$$

dadurch, dass
der 50%-Reckmodul der Seitenverstärkungsgummis (5) 1,5 bis 6,0 MPa beträgt, dadurch, dass
eine maximale Dicke der Seitenverstärkungsgummis (5), gemessen in einer Richtung, senkrecht zur Karkasse (6), 6 mm oder weniger beträgt, und dadurch, dass
der Reifen ein Luftvolumen von 15 000 cm$^3$ aufweist.

2. Notlaufreifen nach Anspruch 1, wobei die Karkasse (6) ein Paar von geteilten Karkassen bildet, von denen ein Reifenbreitenmittelbereich entnommen ist.

3. Notlaufreifen nach Anspruch 1 oder 2, wobei das Verhältnis H1/SH von H1 zu einer Reifenquerschnittshöhe SH innerhalb eines Bereichs von 45 % bis 65 % liegt.

4. Notlaufreifen nach einem der vorhergehenden Ansprüche, wobei eine Reifenradialhöhe des hochgeschlagenen Endes (6c) des hochgeschlagenen Karkassenabschnitts (6b) aus einer Richtung der in Reifenradialrichtung innersten Position der Karkasse (6) 30 mm oder weniger beträgt.

**Revendications**

1. Bandage pneumatique (1), comprenant une partie de bande de roulement (2), une paire de parties de flanc (3) s'étendant en continu sur les deux côtés de la partie de bande de roulement (2), des parties de talon (4) s'étendant en continu sur chaque partie de flanc (3), des gommes de renforcement latérales (5) ayant une section transversale en forme de croissant disposées sur les parties de flanc, une carcasse (6) composée de nappes de câbles à agencement radial s'étendant toroïdalement entre la paire de parties de talon (4), dans lequel :

lorsque le bandage pneumatique (1) est monté sur une jante, une pression interne de 250 kPa ou plus étant appliquée au bandage pneumatique (1),
dans un cas où une largeur de section SW du bandage pneumatique est inférieure à 165 mm, un rapport entre la largeur de section SW et un diamètre extérieur OD du bandage pneumatique, SW/OD correspondant à 0,26 ou moins ; et
dans un cas où la largeur de section SW du bandage pneumatique correspond à 165 mm ou plus, la largeur de section SW et le diamètre extérieur OD du bandage pneumatique satisfont la relation ci-dessous :

$$OD \geq 2{,}135 \text{ x } SW + 282{,}3 \text{ (mm)} ;$$

les parties de talon (4) comportent des tringles (4a) et comportent en outre des bourrages sur tringle (7) sur un côté externe, dans la direction radiale du bandage pneumatique, des tringles (4a) ;
dans lequel l'extrémité repliée vers le haut (6c) de la partie repliée vers le haut de la carcasse (6b) est agencée sur un côté, dans la direction radiale du bandage pneumatique, situé plus vers l'intérieur que la position à largeur maximale du bandage pneumatique ;
**caractérisé en ce que** :
le bandage pneumatique est un bandage pneumatique à roulage à plat (1) ; **en ce que** :
lorsque H1 représente une longueur maximale, dans la direction radiale du bandage pneumatique, de la gomme de renforcement latérale (5), dans une section transversale dans le sens de la largeur du bandage pneumatique, dans un état de référence dans lequel le bandage pneumatique (1) est monté sur une jante et rempli avec une pression interne prédéterminée, sans application de charge, H2 représentant une longueur d'un segment de ligne droite connectant un point le plus externe, dans une direction radiale du bandage pneumatique, du bourrage sur tringle (7), et un point le plus externe, dans la direction radiale du bandage pneumatique, de la tringle (4a), H1 et H2 satisfont la relation ci-dessous :

$$1{,}8 \leq H1/H2 \leq 3{,}5 ;$$

en ce que :
le module d'étirement à 50% des gommes de renforcement latérales (5) est compris entre 1,5 et 6,0 Mpa ; **en ce que** :

une épaisseur maximale des gommes de renforcement latérales (5), mesurée dans une direction perpendiculaire à la carcasse (6,) correspond à 6 mm ou moins ; et **en ce que** :
le bandage pneumatique a un volume d'air de 15000 cm$^3$.

2. Bandage pneumatique à roulage à plat selon la revendication 1, dans lequel la carcasse (6) forme une paire de carcasses divisées dont une région centrale, dans le sens de la largeur du bandage pneumatique, est extraite.

3. Bandage pneumatique à roulage à plat selon les revendications 1 ou 2, dans lequel le rapport H1/SH entre H1 et une hauteur de section transversale du bandage pneumatique SH est compris dans un intervalle allant de 45% à 65%.

4. Bandage pneumatique à roulage à plat selon l'une quelconque des revendications précédentes, dans lequel une hauteur, dans la direction radiale du bandage pneumatique, de l'extrémité repliée vers le haut (6c) de la partie repliée vers le haut de la carcasse (6b), à partir d'une position la plus interne, dans la direction radiale du bandage pneumatique, de la carcasse (6) correspond à 30 mm ou moins.

# *FIG. 1*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012176476 A1
- JP 2013063765 A
- WO 2015182153 A1